# EUROPEAN PATENT APPLICATION

(11) **EP 4 510 470 A1**
(43) Date of publication of application: **19.02.2025**
(21) Application number: 22937455.8
(22) Date of filing: 14.04.2022
(51) Int. Cl.: H04B 10/2575

(54) **WIRELESS COMMUNICATION METHOD, BASE STATION DEVICE, AND WIRELESS COMMUNICATION SYSTEM**

(71) Applicant: Nippon Telegraph And Telephone Corporation, Chiyoda-ku Tokyo 100-8116 (JP)
(72) Inventor: YAMAMOTO Yasuyoshi, Musashino-shi, Tokyo 180-8585 (JP); KITA Naoki, Musashino-shi, Tokyo 180-8585 (JP); SHIRATO Yushi, Musashino-shi, Tokyo 180-8585 (JP); TOSHINAGA Hideki, Musashino-shi, Tokyo 180-8585 (JP); UCHIDA Daisei, Musashino-shi, Tokyo 180-8585 (JP); ARAI Takuto, Musashino-shi, Tokyo 180-8585 (JP); TAKAHASHI Yuta, Musashino-shi, Tokyo 180-8585 (JP)
(74) Representative: Brevalex
(86) International application number: PCT/JP2022/017823
(87) International publication number: WO 2023/199476

(57) **Abstract**

A wireless communication method in a wireless communication system including an aggregation station and an extension station that performs beamforming according to control of the aggregation station, in which the aggregation station transmits an optical signal including at least a beam control signal for controlling beamforming in the extension station and a transmission signal that is data to be transmitted to the extension station via an optical transmission line to perform beamforming control of the extension station, and the extension station transmits the transmission signal by setting, in a phase shifter or by switching a switch, a phase difference for performing beamforming in a specific direction on a basis of the beam control signal included in the optical signal.

## Description

### Technical Field

The present invention relates to a wireless communication method, a base station device, and a wireless communication system.

### Background Art

Conventionally, wireless communication using a millimeter-wave band that allows highspeed transmission has attracted attention. However, in a case where the millimeter-wave band is used, there is a problem that a propagation loss is large and long-distance transmission is difficult. A radio over fiber (RoF) system enables long-distance transmission of a radio frequency signal (RF signal) in the millimeter-wave band, but a coverage area of an antenna unit is a problem. One solution to the problem is beamforming using an array antenna. The technique of Patent Literature 1 is known as a beamforming technique using the RoF system or an optical technique.

### Citation List

### Patent Literature

Patent Literature 1: JP 2020-120252 A

### Summary of Invention

### Technical Problem

However, in a conventional beamforming technique, a same transmission signal is subjected to phase control on a housing station side, and signals subjected to different phase control are transmitted at different wavelengths. Therefore, one beam control requires a fixed optical wavelength corresponding to the number of antenna elements of an extension station, and a wide optical band is occupied. Therefore, there is an issue that wavelength utilization efficiency is reduced. For example, if the number of antenna elements is 64, even in a case where a commercially available wavelength 1.55 µm band (c-band) DWDM optical multiplexer/demultiplexer is used, only 48 wavelengths can be accommodated at a frequency interval of 100 GHz, which is limited.

In view of the above circumstances, an object of the present invention is to provide a technique that enables performing beamforming control while reducing a decrease in wavelength utilization efficiency.

### Solution to Problem

An aspect of the present invention is a wireless communication method in a wireless communication system including an aggregation station and an extension station that performs beamforming according to control of the aggregation station, in which the aggregation station transmits an optical signal including at least a beam control signal for controlling beamforming in the extension station and a transmission signal that is data to be transmitted to the extension station via an optical transmission line to perform beamforming control of the extension station, and the extension station transmits the transmission signal by setting, in a phase shifter or by switching a switch, a phase difference for performing beamforming in a specific direction on a basis of the beam control signal included in the optical signal.

An aspect of the present invention is a base station device in a wireless communication system including an aggregation station and an extension station that performs beamforming according to control of the aggregation station, the base station device including an aggregation station that transmits an optical signal including at least a beam control signal for controlling beamforming in the extension station and a transmission signal that is data to be transmitted to the extension station via an optical transmission line to perform beamforming control of the extension station, and an extension station that transmits the transmission signal by setting, in a phase shifter or by switching a switch, a phase difference for performing beamforming in a specific direction on a basis of the beam control signal included in the optical signal.

An aspect of the present invention is a wireless communication system including an aggregation station and an extension station that performs beamforming according to control of the aggregation station, in which the aggregation station transmits an optical signal including at least a beam control signal for controlling beamforming in the extension station and a transmission signal that is data to be transmitted to the extension station via an optical transmission line to perform beamforming control of the extension station, and the extension station includes a beamforming unit that transmits the transmission signal by setting, in a phase shifter or by switching a switch, a phase difference for performing beamforming in a specific direction on a basis of the beam control signal included in the optical signal.

### Advantageous Effects of Invention

According to the present invention, it is possible to perform beamforming control while reducing a decrease in wavelength utilization efficiency.

### Brief Description of Drawings

[FIG .1] A diagram illustrating a configuration example of a wireless communication system according to a first embodiment.
[FIG .2] A diagram illustrating a first configuration example of a beamforming unit.
[FIG .3] A diagram illustrating a second configuration example of the beamforming unit.
[FIG .4] A sequence diagram illustrating a flow of processing of the wireless communication system according to the first embodiment.
[FIG .5] A diagram illustrating a configuration example of a wireless communication system according to a second embodiment.
[FIG .6] A sequence diagram illustrating a flow of processing of the wireless communication system according to the second embodiment.
[FIG .7] A diagram illustrating a configuration example of a wireless communication system according to a third embodiment.
[FIG .8] A sequence diagram illustrating a flow of processing of the wireless communication system according to the third embodiment.
[FIG .9] A diagram illustrating a configuration example of a wireless communication system according to a fourth embodiment.
[FIG .10] A sequence diagram illustrating a flow of processing of the wireless communication system according to the fourth embodiment.
[FIG .11] A diagram illustrating a configuration example of a wireless communication system according to a fifth embodiment.
[FIG .12] A sequence diagram illustrating a flow of processing of the wireless communication system according to the fifth embodiment.
[FIG .13] A diagram illustrating a configuration example of a wireless communication system according to a sixth embodiment.

### Description of Embodiments

Hereinafter, embodiments of the present invention will be described with reference to drawings.

### (First Embodiment)

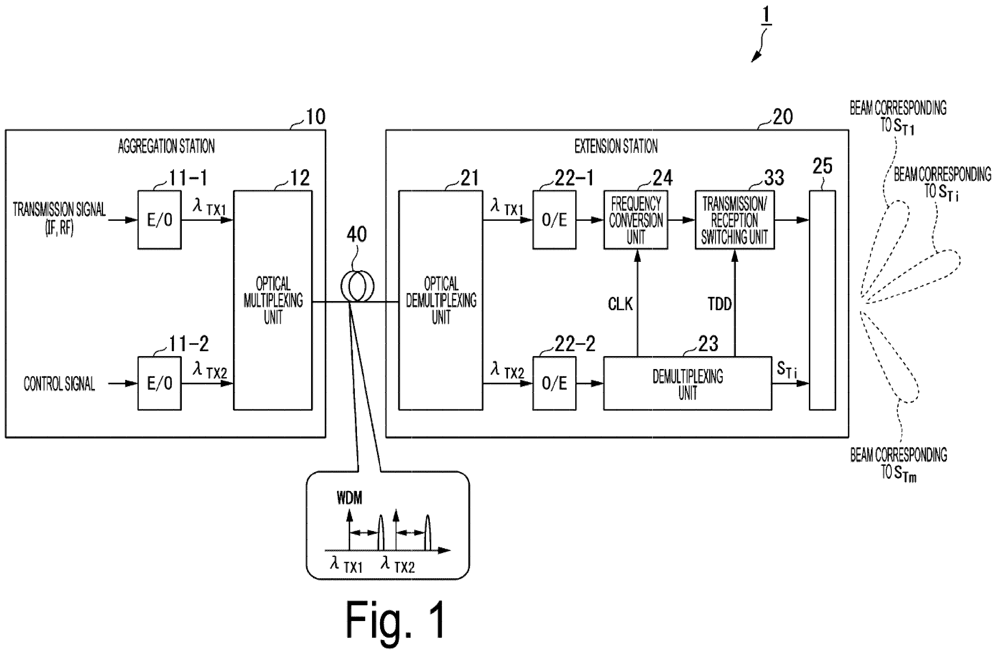

Fig. 1 is a diagram illustrating a configuration example of a wireless communication system 1 according to a first embodiment. The wireless communication system 1 includes an aggregation station 10 and an extension station 20. The aggregation station 10 and the extension station 20 are formed as one base station device. The aggregation station 10 and the extension station 20 are connected via an optical transmission line 40. The optical transmission line 40 is, for example, an optical fiber. The optical transmission line 40 may be one or more single-core fibers or a multi-core fiber having two or more cores. In the following description, a direction from the aggregation station 10 to the extension station 20 is referred to as a downstream direction, and a direction from the extension station 20 to the aggregation station 10 is referred to as an upstream direction.

Fig. 1 illustrates a case of one extension station 20, but the wireless communication system 1 may include a plurality of extension stations 20. In this case, the aggregation station 10 and the plurality of extension stations 20 may be connected by a passive optical network (PON). In a case where the aggregation station 10 and the plurality of extension stations 20 are connected by the PON, an optical splitter (splitting unit) is included between the aggregation station 10 and the plurality of extension stations 20. The optical splitter splits an optical signal output from the aggregation station 10 and outputs the split optical signals to the extension stations 20. The passive optical network is, for example, a wavelength division multiplexing passive optical network (WDM-PON) or a time division multiplexing passive optical network (TDM-PON).

The aggregation station 10 remotely controls beamforming of the extension station 20. For example, the aggregation station 10 converts a transmission signal and a control signal into optical signals having different wavelengths, and remotely controls beamforming of the extension station 20 by a wavelength multiplexed signal generated by performing wavelength division multiplexing (WDM) on the optical signals having different wavelengths. For example, the aggregation station 10 remotely controls beamforming of the extension station 20 using an analog RoF technique.

The transmission signal is a main signal including data to be transmitted. The transmission signal may be an intermediate frequency signal (IF signal) or an RF signal.

The control signal is a signal for controlling operation in the extension station 20. The control signal includes at least a beam control signal for controlling beamforming in the extension station 20. The beam control signal includes phase indication information for radiating a transmission signal in a direction in which beamforming is desired. Note that the control signal may include a clock signal, a level adjustment signal, or a time division duplex (TDD) signal in addition to a beam control signal. Here, the clock signal is a signal serving as a reference in a case of generating a local oscillator (LO) signal for frequency-converting a transmission signal from IF to RF in the extension station 20. The level adjustment signal is an LO signal. Note that, in a case where the transmission signal is an RF signal, performing frequency conversion is not necessary, and thus, the control signal does not include either a clock signal or a level adjustment signal. The TDD signal is a signal indicating a timing at which transmission and reception in the extension station 20 are switched. The TDD signal is a signal necessary for implementing bidirectional communication by the time division duplex (TDD) method. Therefore, in a case where bidirectional communication is implemented by the frequency division duplex (FDD) method in the extension station 20, the control signal may not include a TDD signal. In the following description of each embodiment, it is assumed that the extension station 20 performs bidirectional communication by the time division duplex (TDD) method.

The extension station 20 is installed at a place away from a place where the aggregation station 10 is disposed. The extension station 20 performs beamforming on the basis of a control signal transmitted from the aggregation station 10 and radiates a transmission signal wirelessly. As a result, the extension station 20 communicates with wireless devices located around the installation place. Further, in a case where bidirectional communication is performed by the time division duplex (TDD) method, the extension station 20 switches between transmission and reception at a timing indicated by a TDD signal.

Next, specific configurations of the aggregation station 10 and the extension station 20 will be described. Note that Fig. 1 illustrates the configurations of the aggregation station 10 and the extension station 20 for implementing communication in the downstream direction.

The aggregation station 10 includes a plurality of E/Os 11-1 to 11-2 and an optical multiplexing unit 12.

A transmission signal is input to an E/O 11-1. The E/O 11-1 intensity-modulates an optical signal having a wavelength λ_{TX1} using the input transmission signal. As a result, the E/O 11-1 generates an optical modulation signal having the wavelength λ_{TX1}. Note that the power level of a transmission signal input to the E/O 11-1 may be adjusted as necessary.

A control signal is input to an E/O 11-2. For example, in a case where the transmission signal is an IF signal, a control signal including a beam control signal, a clock signal, and a TDD signal is input to the E/O 11-2. For example, in a case where the transmission signal is an RF signal, a control signal including a beam control signal and a TDD signal is input to the E/O 11-2.

The beam control signal includes at least one piece of information S_{T1}, ..., and S_{Tm} for causing beamforming in any of m (m is an integer of 1 or more) directions. m beam control signals correspond one-to-one to m transmission beams, and the user can switch the transmission beams in a desired direction by switching the beam control signals. The E/O 11-2 intensity-modulates an optical signal having a wavelength λ_{TX2} using an input control signal. As a result, the E/O 11-2 generates an optical modulation signal having the wavelength λ_{TX2}. Note that, as an intensity modulation method, a direct modulation method (directly modulated laser [DML]) may be used, or an external modulation method (Mach Zehnder modulator [MAZ], electro absorption modulator [EAM]) may be used. The modulation signal propagated through the optical transmission line 40 may be an optical double sideband (ODSB), an optical single sideband (OSSB), or an optical carrier suppression (OCS). The power level of a control signal input to the E/O 11-2 may be adjusted as necessary.

The optical multiplexing unit 12 multiplexes an optical modulation signal having the wavelength λ_{TX1} generated by the E/O 11-1 and an optical modulation signal having the wavelength λ_{TX2} generated by the E/O 11-2. Specifically, the optical multiplexing unit 12 generates a wavelength multiplexed signal by performing wavelength division multiplexing on an optical modulation signal having the wavelength λ_{TX1} generated by the E/O 11-1 and an optical modulation signal having the wavelength λ_{TX2} generated by the E/O 11-2. The optical multiplexing unit 12 outputs the generated wavelength multiplexed signal to the extension station 20 via the optical transmission line 40.

The extension station 20 includes an optical demultiplexing unit 21, a plurality of O/Es 22-1 to 22-2, a demultiplexing unit 23, a frequency conversion unit 24, a beamforming unit 25, and a transmission/reception switching unit 33. Note that the extension station 20 may not include the frequency conversion unit 24 in a case where the aggregation station 10 transmits an RF signal as a transmission signal. Here, a case where the extension station 20 includes the frequency conversion unit 24 on the assumption that the aggregation station 10 transmits an IF signal as a transmission signal will be described. The transmission/reception switching unit 33 may be formed integrally with the frequency conversion unit 24 or may be included in the beamforming unit 25.

The optical demultiplexing unit 21 demultiplexes a wavelength multiplexed signal transmitted through the optical transmission line 40. As a result, the optical demultiplexing unit 21 demultiplexes the wavelength multiplexed signal into an optical modulation signal having the wavelength λ_{TX1} and an optical modulation signal having the wavelength λ_{TX2}. The optical demultiplexing unit 21 outputs the optical modulation signal having the wavelength λ_{TX1} to the O/E 22-1 and outputs the optical modulation signal having the wavelength λ_{TX2} to the O/E 22-2.

The O/E 22-1 is a direct detection unit that directly detects an optical modulation signal having the wavelength λ_{TX1} and extracts an electrical signal. The optical modulation signal having the wavelength λ_{TX1} includes a transmission signal. Therefore, the O/E 22-1 outputs an electrical signal including a transmission signal to the frequency conversion unit 24. Note that the O/E 22-1 outputs an electrical signal to the beamforming unit 25 in a case where the frequency conversion unit 24 is not included in the extension station 20.

The O/E 22-2 is a direct detection unit that directly detects an optical modulation signal having the wavelength λ_{TX2} and extracts an electrical signal. The optical modulation signal having the wavelength λ_{TX2} includes a control signal. Therefore, the O/E 22-2 outputs an electrical signal including a control signal to the demultiplexing unit 23.

The demultiplexing unit 23 demultiplexes an electrical signal output by the O/E 22-2 according to the frequency. As a result, the demultiplexing unit 23 separates a clock signal (CLK in Fig. 1), a beam control signal (S_{Ti} in Fig. 1), and a TDD signal from the electrical signal. The demultiplexing unit 23 outputs the clock signal to the frequency conversion unit 24, outputs the beam control signal to the beamforming unit 25, and outputs the TDD signal to the transmission/reception switching unit 33.

The frequency conversion unit 24 converts the frequency of a transmission signal (IF signal) included in an electrical signal output from the O/E 22-1 into a signal having a frequency in an RF band (RF signal) using an LO signal generated on the basis of a clock signal.

The transmission/reception switching unit 33 is a switch for switching between transmission and reception on the basis of an input TDD signal. Specifically, the transmission/reception switching unit 33 switches connection so as to electrically connect the frequency conversion unit 24 and the beamforming unit 25 at a transmission timing indicated by the TDD signal. In a case where the frequency conversion unit 24 and the beamforming unit 25 are electrically connected, a signal having a frequency in the RF band (RF signal) output from the frequency conversion unit 24 is output to the beamforming unit 25. The transmission/reception switching unit 33 switches connection so as to electrically connect the beamforming unit 25 and a frequency conversion unit used for reception at a reception timing indicated by the TDD signal.

The beamforming unit 25 performs beamforming on the basis of an input beam control signal and radiates a wireless signal corresponding to a transmission signal. The beamforming unit 25 is a control-unit-equipped functional unit capable of controlling a beamforming direction in the extension station 20.

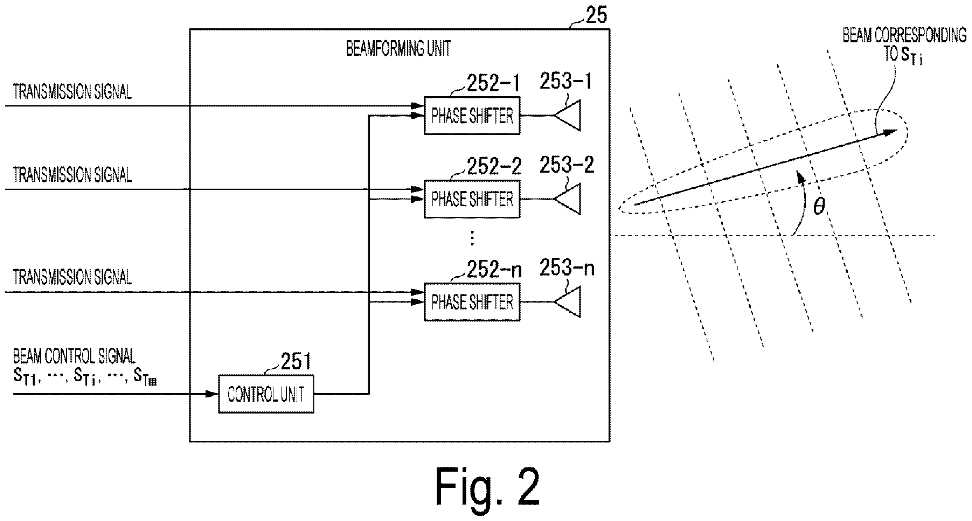

Fig. 2 is a diagram illustrating a first configuration example of the beamforming unit 25. The beamforming unit 25 illustrated in Fig. 2 includes a control unit 251, n (n is an integer of 2 or more) phase shifters 252-1 to 252-n, and n antennas 253 to 253-n. One antenna 253 is attached to each of the phase shifters 252.

The control unit 251 electrically controls the phase shifters 252-1 to 252-n according to an input beam control signal S_{Ti}. As a result, the phase of a transmission signal input to each of the phase shifters 252-1 to 252-n can be adjusted.

The phase shifters 252-1 to 252-n adjust the phase of an input transmission signal under the control of the control unit 251.

The antennas 253 to 253-n convert a transmission signal having a phase that has been adjusted by the phase shifters 252-1 to 252-n into a wireless signal and radiate the wireless signal.

In the beamforming unit 25 illustrated in Fig. 2, in a case where a transmission signal is input in phase, the phase is adjusted to a phase corresponding to a beam control signal by the phase shifters 252-1 to 252-n, and intensifying in phase in a specific direction occurs and a transmission beam is formed. The direction in which intensifying in phase occurs varies depending on the beam control signal S_{Ti}. The beamforming unit 25 illustrated in Fig. 2 has input/output reversibility, and in a case where an RF signal arrives from a direction of a beam corresponding to a certain beam control signal, intensifying in phase occurs. In a case where an RF signal arrives from other directions, weakening occurs. Since the beamforming unit 25 illustrated in Fig. 2 has such properties, the direction of a reception beam can also be selected according to selection of the beam control signal S_{Ti}. The configuration related to the first configuration example of the beamforming unit 25 is described in, for example, Reference Literature 1.
(Reference Literature 1: Keith Benson, "Phased Array Beamforming ICs Simplify Antenna Design", Analog Dialogue 53-01, January 2019)

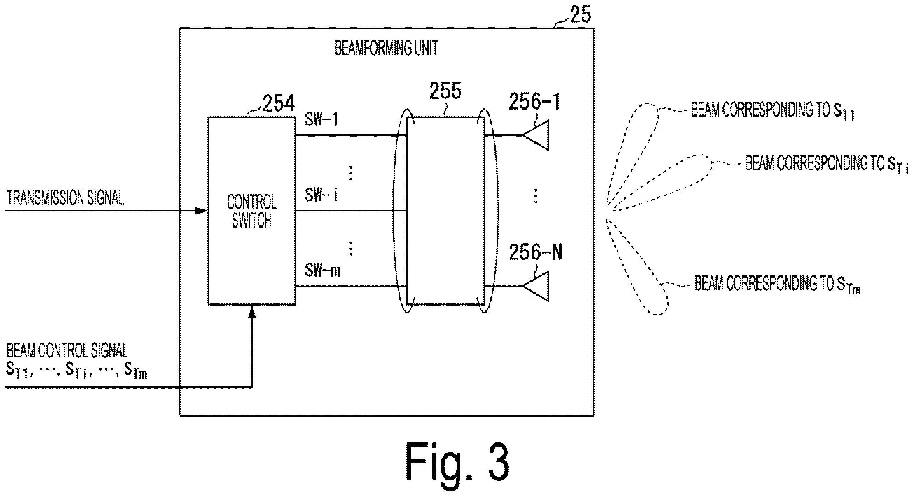

Fig. 3 is a diagram illustrating a second configuration example of the beamforming unit 25. The beamforming unit 25 illustrated in Fig. 3 includes a control switch 254, a passive beamforming unit 255, and N (N is an integer of 2 or more) antennas 253 to 253-N.

The control switch 254 is a switch capable of switching connection between an input port and output ports according to an input beam control signal S_{Ti}. A transmission signal is input to the input port. Ports of the passive beamforming unit 255 are connected to the respective output ports. The control switch 254 includes one input port and m output ports SW-1 to SW-m. The output ports SW-1 to SW-m of the control switch 254 correspond one-to-one to the beam control signals S_{T1} to S_{Tm}. For example, in a case where the beam control signal S_{T1} is input as a beam control signal, the control switch 254 connects the input port and an output port SW-1. As a result, a transmission signal is output from the output port SW-1 of the control switch 254.

The passive beamforming unit 255 is a functional unit capable of performing beamforming by applying a specific phase difference to output beams from respective antennas 256-1 to 256-N according to the input port. The passive beamforming unit 255 includes m input ports and N (N is an integer of 1 or more) output ports. The passive beamforming unit 255 is, for example, a beamforming circuit, a reflector, a lens, or the like.

The beamforming circuit includes m first ports and N second ports. The m output ports SW-1 to SW-m of the control switch 254 are connected to the m first ports of the beamforming circuit. The antennas 256-1 to 256-N are connected to the second ports of the beamforming circuit.

In a case where a signal is input to a certain first port, the beamforming circuit outputs signals having the same amplitude and linearly inclined phases from the N second ports. In the beamforming circuit, the inclination of the phase varies depending on the first port. The beamforming circuit can form a beam in a direction corresponding to the first port to which a transmission signal is input.

The beamforming circuit has input/output reversibility, and, in a case where a signal arrives from a direction of a beam corresponding to a certain first port, the signal is output only from the first port. Examples of the beamforming circuit include a Butler matrix, a Blas matrix, a Nolen matrix, and a Rotman lens (see, for example, Reference Literature 2).

(Reference Literature 2: Wei Hong, Zhi Hao Jiang, Chao Yu, Jianyi Zhou, Peng Chen, Zhiqiang Yu, Hui Zhang, Binqi Yang, Xingdong Pang, Mei Jiang, Yujian Cheng, Mustafa K. Taher Al-Nuaimi, Yan Zhang, Jixin Chen, and Shiwen He, "Multibeam antenna technologies for 5G wireless communications", IEEE Transactions on Antennas and Propagation, 65(12), 6231-6249 (2017).)

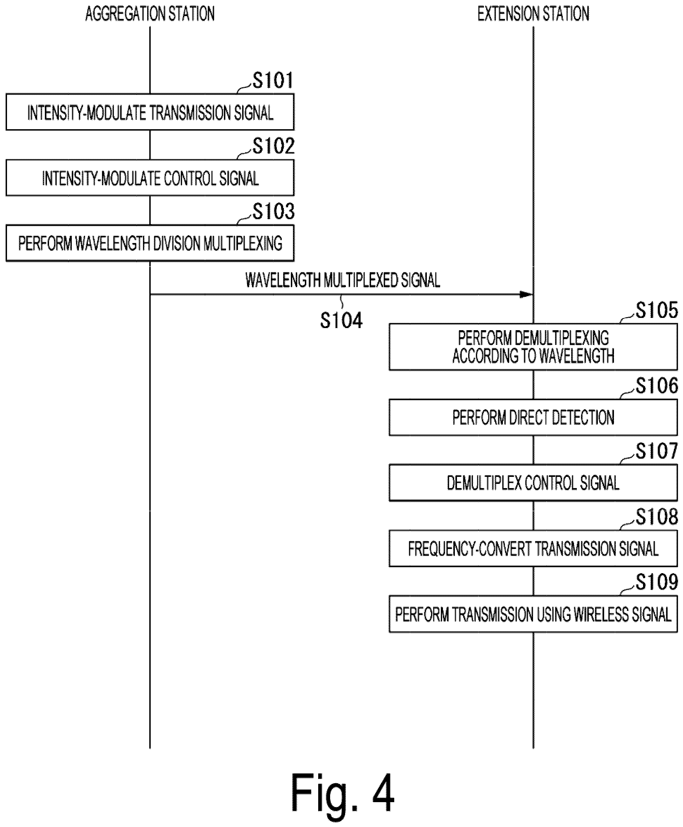

Fig. 4 is a sequence diagram illustrating a flow of processing of the wireless communication system 1 according to the first embodiment. Note that, in Fig. 4, an example in which an IF signal is input as a transmission signal to the aggregation station 10 will be described.

The E/O 11-1 of the aggregation station 10 receives an IF signal (transmission signal) as input. The E/O 11-1 intensity-modulates an optical signal having the wavelength λ_{TX1} using the input IF signal (transmission signal) (step S101). As a result, an optical modulation signal having the wavelength λ_{TX1} is generated. The E/O 11-1 outputs the generated optical modulation signal having the wavelength λ_{TX1} to the optical multiplexing unit 12.

The E/O 11-2 of the aggregation station 10 receives a control signal as input. The E/O 11-2 intensity-modulates an optical signal having the wavelength λ_{TX2} using the input control signal (step S102). As a result, an optical modulation signal having the wavelength λ_{TX2} is generated. The E/O 11-2 outputs the generated optical modulation signal having the wavelength λ_{TX2} to the optical multiplexing unit 12. Note that the control signal input to the E/O 11-2 includes a beam control signal corresponding to a direction in which beamforming is desired in the extension station 20, a clock signal, and a TDD signal. The beam control signal corresponding to a direction in which beamforming is desired in the extension station 20 is selected by the user.

The optical multiplexing unit 12 performs wavelength division multiplexing on the optical modulation signal having the wavelength λ_{TX1} output from the E/O 11-1 and the optical modulation signal having the wavelength λ_{TX2} output from the E/O 11-2 (step S103). As a result, a wavelength multiplexed signal is generated. The optical multiplexing unit 12 transmits the generated wavelength multiplexed signal to the optical transmission line 40 (step S104). The wavelength multiplexed signal transmitted to the optical transmission line 40 is input to the extension station 20.

The optical demultiplexing unit 21 of the extension station 20 demultiplexes the input wavelength multiplexed signal (step S105). As a result, the wavelength multiplexed signal is demultiplexed into the optical modulation signal having the wavelength λ_{TX1} and the optical modulation signal having the wavelength λ_{TX2}. In the optical demultiplexing unit 21, the O/E 22-1 is connected to an output port for the wavelength λ_{TX1}, and the O/E 22-2 is connected to an output port for the wavelength λ_{TX2}. Therefore, the optical modulation signal having the wavelength λ_{TX1} is output to the O/E 22-1 and the optical modulation signal having the wavelength λ_{TX2} is output to the O/E 22-2.

The O/E 22-1 directly detects the optical modulation signal having the wavelength λ_{TX1} and extracts an electrical signal. The O/E 22-1 outputs the extracted electrical signal including the IF signal (transmission signal) to the frequency conversion unit 24. The O/E 22-2 directly detects the optical modulation signal having the wavelength λ_{TX2} and extracts an electrical signal (step S106). The O/E 22-2 outputs the extracted electrical signal including the control signal to the demultiplexing unit 23.

The demultiplexing unit 23 demultiplexes the electrical signal output from the O/E 22-2 according to the frequency (step S107). Specifically, the demultiplexing unit 23 separates the clock signal, the beam control signal, and the TDD signal included in the electrical signal output from the O/E 22-2 according to the frequency. As a result, the electrical signal is separated into the clock signal, the beam control signal, and the TDD signal. The demultiplexing unit 23 outputs the clock signal to the frequency conversion unit 24, outputs the beam control signal to the beamforming unit 25, and outputs the TDD signal to the transmission/reception switching unit 33.

The frequency conversion unit 24 generates an LO signal with reference to the clock signal output from the demultiplexing unit 23. The frequency conversion unit 24 converts the frequency of the IF signal (transmission signal) included in the electrical signal output from the O/E 22-1 into a frequency in the RF band using the generated LO signal (step S108). That is, the frequency conversion unit 24 converts the frequency of the transmission signal. The frequency conversion unit 24 outputs the transmission signal after the frequency conversion to the transmission/reception switching unit 33.

The transmission/reception switching unit 33 switches connection so as to electrically connect the frequency conversion unit 24 and the beamforming unit 25 at a transmission timing indicated by the TDD signal. As a result, the transmission signal after the frequency conversion output from the frequency conversion unit 24 is output to the beamforming unit 25.

The beamforming unit 25 forms a beam on the basis of the beam control signal output from the demultiplexing unit 23 and radiates the transmission signal after the frequency conversion using a wireless signal (step S109). Here, as a specific operation of the beamforming unit 25, the beamforming unit 25 illustrated in Fig. 2 will be described as an example. The control unit 251 controls rotation amounts of the phase adjusted by the respective phase shifters 252-1 to 252-n according to the input beam control signal.

The phase shifters 252-1 to 252-n adjust the phase of the input transmission signal. At this time, the phase shifters 252-1 to 252-n adjust the phase of the transmission signal under the control of the control unit 251 so as to form a beam in a direction corresponding to the beam control signal input to the control unit 251. The transmission signal having a phase that has been adjusted by the phase shifters 252-1 to 252-n is output to the antennas 253-1 to 253-n. The antennas 253-1 to 253-n convert the input transmission signal into a wireless signal and radiate the wireless signal.

According to the wireless communication system 1 formed as described above, it is possible to perform beamforming control while reducing a decrease in wavelength utilization efficiency. Specifically, in the wireless communication system 1, the aggregation station 10 transmits a control signal including a beam control signal for controlling beamforming (signal for phase control) and a main signal to the extension station 20 at different wavelengths, and beamforming is performed on the basis of the beam control signal on the extension station 20 side. As a result, remote beamforming using only two wavelengths can be implemented. Therefore, as in the conventional art, one beam control does not require a fixed optical wavelength corresponding to the number of antenna elements of an extension station. As described above, in the wireless communication system 1, the number of wavelengths required for one beam control can be greatly reduced. Therefore, it is possible to perform beamforming control while reducing a decrease in wavelength utilization efficiency.

Conventionally, a direct detection unit for an optical modulation signal needs to be prepared in an extension station by the number of antenna elements, and there is a limit to simplification and cost reduction of the extension station. On the other hand, in the wireless communication system 1, a configuration required for the extension station 20 to perform one beam control can be greatly reduced as compared with the conventional art. Therefore, it is possible to reduce an increase in cost of the device.

### (Second Embodiment)

In the first embodiment, the configuration in which the aggregation station converts a transmission signal and a control signal into optical signals having different wavelengths and then performs wavelength division multiplexing has been described. A second embodiment is different from the first embodiment in that an aggregation station frequency-multiplexes a transmission signal and a control signal and transmits the signal in an optical transmission line by the subcarrier multiplexing (SCM) method. In the second embodiment, differences from the first embodiment will be mainly described.

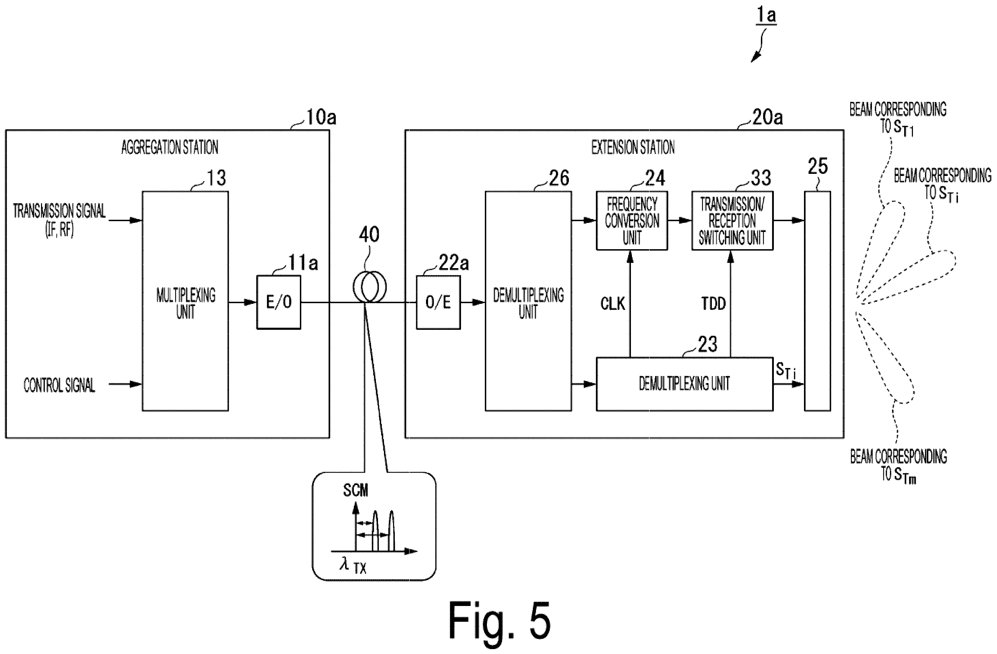

Fig. 5 is a diagram illustrating a configuration example of a wireless communication system 1a according to the second embodiment. The wireless communication system 1a includes an aggregation station 10a and an extension station 20a. The aggregation station 10a and the extension station 20a are connected via an optical transmission line 40.

The aggregation station 10a remotely controls beamforming of the extension station 20a by a multiplexed signal generated by frequency-multiplexing a transmission signal and a control signal. For example, the aggregation station 10a remotely controls beamforming of the extension station 20a using an analog RoF technique.

The aggregation station 10a includes an E/O 11a and a multiplexing unit 13.

A transmission signal and a control signal are input to the multiplexing unit 13. For example, the control signal input to the multiplexing unit 13 includes a beam control signal, a clock signal, and a TDD signal. The multiplexing unit 13 generates a multiplexed signal by frequency-multiplexing the input transmission signal and control signal. The multiplexing unit 13 outputs the generated multiplexed signal to the E/O 11a. Note that the power level of the transmission signal and control signal input to the multiplexing unit 13 may be adjusted as necessary.

The E/O 11a intensity-modulates an optical signal having a wavelength λ_{TX} using the input multiplexed signal. As a result, the E/O 11a generates an optical modulation signal having the wavelength λ_{TX}. The E/O 11a transmits the generated optical modulation signal having the wavelength λ_{TX} to the optical transmission line 40.

The extension station 20a includes an O/E 22a, a demultiplexing unit 23, a frequency conversion unit 24, a beamforming unit 25, a demultiplexing unit 26, and a transmission/reception switching unit 33. Note that the extension station 20a may not include the frequency conversion unit 24 in a case where the aggregation station 10a transmits an RF signal as a transmission signal. Here, a case where the extension station 20a includes the frequency conversion unit 24 on the assumption that the aggregation station 10a transmits an IF signal as a transmission signal will be described.

The O/E 22a is a direct detection unit that directly detects an optical modulation signal having the wavelength λ_{TX} transmitted from the aggregation station 10a and extracts an electrical signal. The optical modulation signal having the wavelength λ_{TX} includes a transmission signal and a control signal. Therefore, the O/E 22a outputs an electrical signal including a transmission signal and a control signal to the demultiplexing unit 26.

The demultiplexing unit 26 demultiplexes an electrical signal output from the O/E 22a according to the frequency. As a result, a transmission signal and a control signal are separated. The demultiplexing unit 26 outputs the transmission signal to the frequency conversion unit 24 and outputs the control signal to the demultiplexing unit 23. Note that the demultiplexing unit 26 outputs a transmission signal to the beamforming unit 25 in a case where the frequency conversion unit 24 is not included in the extension station 20a.

Since processing of the demultiplexing unit 23, the frequency conversion unit 24, and the beamforming unit 25 is similar to that of the first embodiment, the description thereof will be omitted.

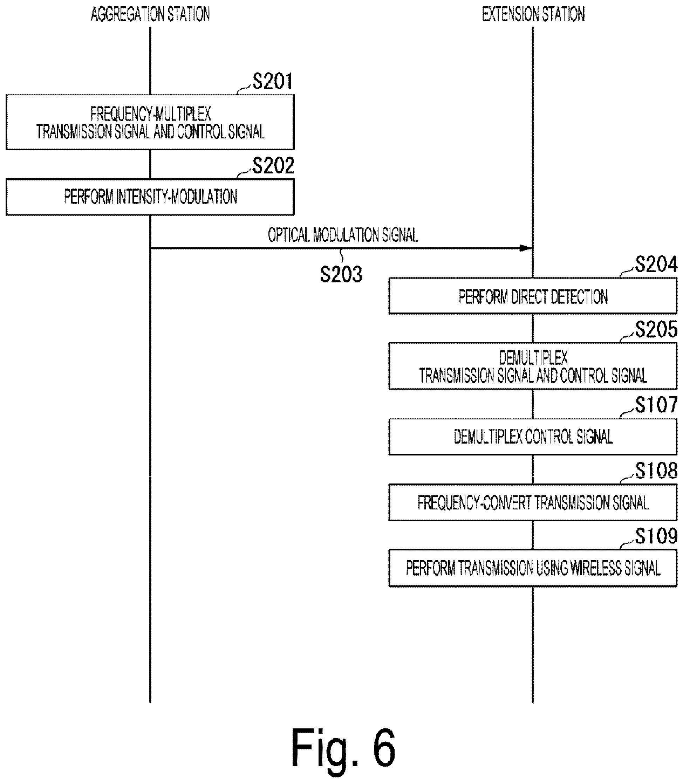

Fig. 6 is a sequence diagram illustrating a flow of processing of the wireless communication system 1a according to the second embodiment. Note that, in Fig. 6, an example in which an IF signal is input as a transmission signal to the aggregation station 10a will be described. In Fig. 6, processing similar to that in Fig. 4 will be denoted by the same reference signs as those used in Fig. 4, and description thereof will be omitted.

The multiplexing unit 13 of the aggregation station 10a receives an IF signal (transmission signal) and a control signal as input. The multiplexing unit 13 frequency-multiplexes the input IF signal (transmission signal) and control signal (step S201). As a result, a multiplexed signal is generated. Note that the control signal input to the multiplexing unit 13 includes a beam control signal corresponding to a direction in which beamforming is desired in the extension station 20a and a clock signal. The beam control signal corresponding to a direction in which beamforming is desired in the extension station 20a is selected by the user. The multiplexing unit 13 outputs the generated multiplexed signal to the E/O 11a.

The E/O 11a intensity-modulates an optical signal having the wavelength λ_{TX} using the multiplexed signal output from the multiplexing unit 13 (step S202). As a result, an optical modulation signal having the wavelength λ_{TX} is generated. The E/O 11a transmits the generated optical modulation signal having the wavelength λ_{TX} to the optical transmission line 40 (step S203). The optical modulation signal transmitted to the optical transmission line 40 is input to the extension station 20a.

The O/E 22a of the extension station 20a directly detects the input optical modulation signal and extracts an electrical signal (step S204). The O/E 22a outputs the extracted electrical signal to the demultiplexing unit 26. The demultiplexing unit 26 demultiplexes the electrical signal output from the O/E 22a according to the frequency (step S205). Specifically, the demultiplexing unit 26 separates the transmission signal and the control signal included in the electrical signal output from the O/E 22a according to the frequency. As a result, the transmission signal and the control signal are separated. The demultiplexing unit 26 outputs the transmission signal to the frequency conversion unit 24 and outputs the control signal to the demultiplexing unit 23. Thereafter, processing in and after step S107 is performed.

According to the wireless communication system 1a formed as described above, also in a case where a transmission signal and a control signal are frequency-multiplexed, beamforming can be performed on the basis of a beam control signal on the extension station 20a side. As a result, remote beamforming using only one wavelength can be implemented. Therefore, as in the conventional art, one beam control does not require a fixed optical wavelength corresponding to the number of antenna elements of an extension station. As described above, in the wireless communication system 1a, the number of wavelengths required for one beam control can be greatly reduced. Therefore, it is possible to perform beamforming control while reducing a decrease in wavelength utilization efficiency.

### (Third Embodiment)

In the second embodiment, the configuration in which the extension station generates an LO signal in the frequency conversion unit on the basis of a clock signal has been described. On the other hand, a third embodiment is different from the second embodiment in that an LO signal is transmitted from an aggregation station. In the third embodiment, differences from the second embodiment will be mainly described.

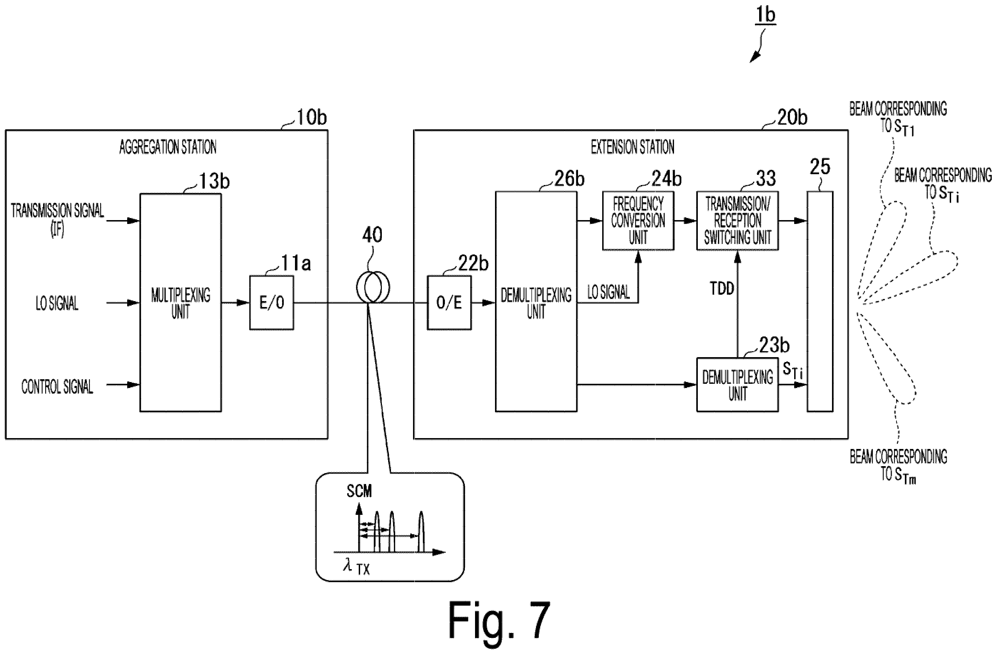

Fig. 7 illustrates a configuration example of a wireless communication system 1b according to the third embodiment. The wireless communication system 1b includes an aggregation station 10b and an extension station 20b. The aggregation station 10b and the extension station 20b are connected via an optical transmission line 40.

The aggregation station 10b remotely controls beamforming of the extension station 20b by a multiplexed signal generated by frequency-multiplexing a transmission signal, a control signal, and an LO signal. For example, the aggregation station 10b remotely controls beamforming of the extension station 20b using an analog RoF technique.

The aggregation station 10b includes an E/O 11a and a multiplexing unit 13b.

A transmission signal, a control signal, and an LO signal are input to the multiplexing unit 13b. For example, the control signal input to the multiplexing unit 13b includes a beam control signal and a TDD signal. Here, in the third embodiment, it is assumed that frequency conversion of a transmission signal is performed in the extension station 20b. Therefore, the transmission signal input to the multiplexing unit 13b is an IF signal. The multiplexing unit 13b generates a multiplexed signal by frequency-multiplexing the input transmission signal, control signal, and LO signal. The multiplexing unit 13b outputs the generated multiplexed signal to the E/O 11a. Note that the power level of the transmission signal, control signal, and LO signal input to the multiplexing unit 13 may be adjusted as necessary.

The extension station 20b includes an O/E 22b, a demultiplexing unit 23b, a frequency conversion unit 24b, a beamforming unit 25, a demultiplexing unit 26b, and a transmission/reception switching unit 33.

The O/E 22b is a direct detection unit that directly detects an optical modulation signal having the wavelength λ_{TX} transmitted from the aggregation station 10b and extracts an electrical signal. The optical modulation signal having the wavelength λ_{TX} transmitted from the aggregation station 10b includes a transmission signal, a control signal, and an LO signal. Therefore, the O/E 22b outputs an electrical signal including a transmission signal, a control signal, and an LO signal to the demultiplexing unit 26b.

The demultiplexing unit 26b demultiplexes an electrical signal extracted by the O/E 22b according to the frequency. Specifically, the demultiplexing unit 26b separates a transmission signal, a control signal, and an LO signal included in an electrical signal extracted by the O/E 22b according to the frequency. As a result, a transmission signal, a control signal, and an LO signal are separated. The demultiplexing unit 26b outputs the transmission signal and the LO signal to the frequency conversion unit 24b and outputs the control signal to the demultiplexing unit 23b.

The demultiplexing unit 23b demultiplexes a control signal output by the demultiplexing unit 26b according to the frequency. As a result, the demultiplexing unit 23b separates a beam control signal (S_{Ti} in Fig. 7) and a TDD signal from the control signal. The demultiplexing unit 23b outputs the beam control signal to the beamforming unit 25, and outputs the TDD signal to the transmission/reception switching unit 33.

The frequency conversion unit 24b converts the frequency of a transmission signal (IF signal) output from the demultiplexing unit 26b into a signal having a frequency in an RF band (RF signal) using an LO signal output from the demultiplexing unit 26b.

Since processing of the beamforming unit 25 and the transmission/reception switching unit 33 is similar to that of the second embodiment, the description thereof will be omitted.

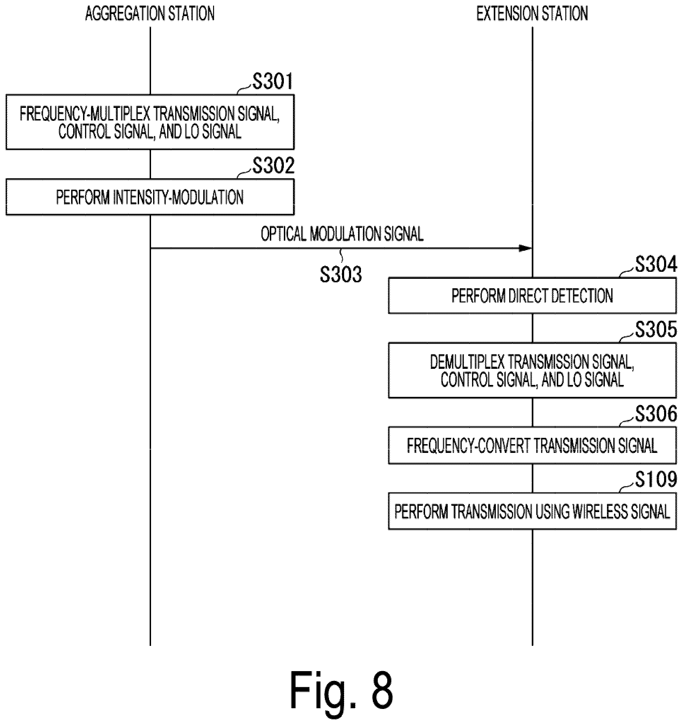

Fig. 8 is a sequence diagram illustrating a flow of processing of the wireless communication system 1b according to the third embodiment. In Fig. 8, processing similar to that in Fig. 6 will be denoted by the same reference signs as those used in Fig. 6, and description thereof will be omitted.

The multiplexing unit 13b of the aggregation station 10b receives an IF signal (transmission signal), a control signal, and an LO signal as input. The multiplexing unit 13b frequency-multiplexes the input IF signal (transmission signal), control signal, and LO signal (step S301). As a result, a multiplexed signal is generated. Note that the control signal input to the multiplexing unit 13b includes a beam control signal corresponding to a direction in which beamforming is desired in the extension station 20b and a TDD signal. Unlike the second embodiment, the control signal does not include a clock signal. The beam control signal corresponding to a direction in which beamforming is desired in the extension station 20b is selected by the user. The multiplexing unit 13b outputs the generated multiplexed signal to the E/O 11a.

The E/O 11a intensity-modulates an optical signal having the wavelength λ_{TX} using the multiplexed signal output from the multiplexing unit 13b (step S302). As a result, an optical modulation signal having the wavelength λ_{TX} is generated. The E/O 11a transmits the generated optical modulation signal having the wavelength λ_{TX} to the optical transmission line 40 (step S303). The optical modulation signal transmitted to the optical transmission line 40 is input to the extension station 20b.

The O/E 22b of the extension station 20b directly detects the input optical modulation signal and extracts an electrical signal (step S304). The O/E 22b outputs the electrical signal including the IF signal (transmission signal), the control signal, and the LO signal to the demultiplexing unit 26b. The demultiplexing unit 26b demultiplexes the electrical signal output from the O/E 22b according to the frequency (step S305). Specifically, the demultiplexing unit 26b separates the transmission signal, the clock signal, and the LO signal included in the electrical signal output from the O/E 22b according to the frequency. The demultiplexing unit 26b outputs the transmission signal and the LO signal to the frequency conversion unit 24b and outputs the control signal to the demultiplexing unit 23b. The demultiplexing unit 23b separates the beam control signal and the TDD signal from the control signal output from the demultiplexing unit 26b. The demultiplexing unit 23b outputs the beam control signal to the beamforming unit 25, and outputs the TDD signal to the transmission/reception switching unit 33.

The frequency conversion unit 24b converts the frequency of the IF signal (transmission signal) output from the demultiplexing unit 26b into a frequency in an RF band using the LO signal output from the demultiplexing unit 26b (step S306). That is, the frequency conversion unit 24b converts the frequency of the transmission signal. The frequency conversion unit 24b outputs the transmission signal after the frequency conversion to the transmission/reception switching unit 33. The transmission/reception switching unit 33 switches connection so as to electrically connect the frequency conversion unit 24b and the beamforming unit 25 at a transmission timing indicated by the TDD signal. As a result, the transmission signal after the frequency conversion output from the frequency conversion unit 24b is output to the beamforming unit 25. Thereafter, processing of step S109 is performed.

According to the wireless communication system 1b formed as described above, the aggregation station 10b transmits an optical signal to the extension station 20b including an LO signal that is a signal for frequency conversion. As a result, the LO signal does not need to be generated in the extension station 20b. In this manner, the configuration of the extension station 20b can be simplified as compared with the second embodiment. A larger number of the extension stations 20b than the number of aggregation stations 10b are installed. Therefore, it is possible to simplify the extension station 20b and reduce the cost, and accordingly, a significant cost reduction is expected. Therefore, effects similar to those of the second embodiment can be obtained, and the cost related to implementation of the system can be reduced as compared with the second embodiment.

### (Fourth Embodiment)

In the first to third embodiments, the configurations of signal transmission in the downstream direction have been described. In a fourth embodiment, a configuration of signal transmission in the upstream direction will be described.

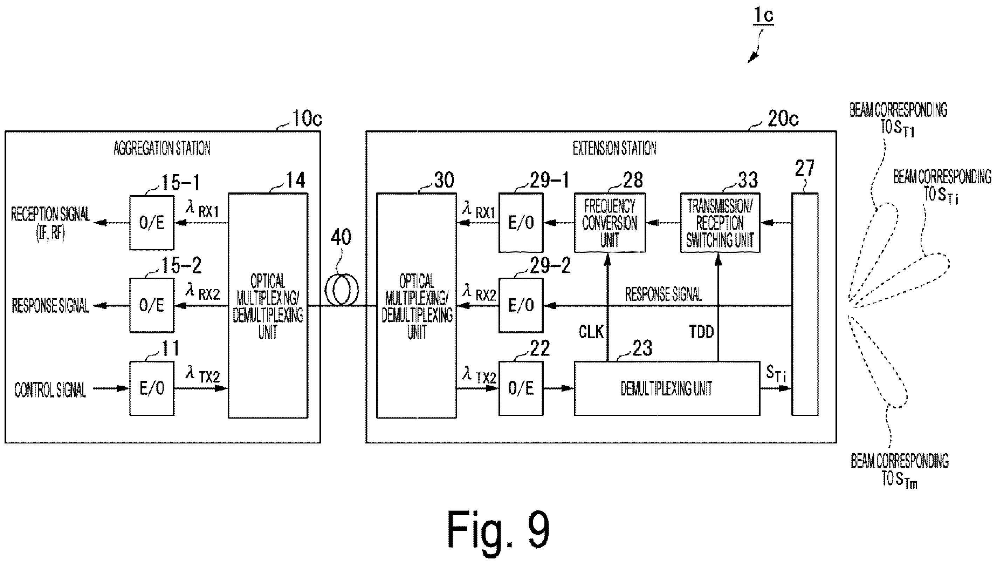

Fig. 9 is a diagram illustrating a configuration example of a wireless communication system 1c according to the fourth embodiment. The wireless communication system 1c includes an aggregation station 10c and an extension station 20c. The aggregation station 10c and the extension station 20c are connected via an optical transmission line 40.

Similarly to the first embodiment, the aggregation station 10c remotely controls beamforming of the extension station 20c by transmitting a control signal to the extension station 20c. For example, the aggregation station 10c remotely controls beamforming of the extension station 20c using an analog RoF technique. Further, the aggregation station 10c receives a reception signal received by the extension station 20c.

Similarly to the first embodiment, the extension station 20c performs beamforming on the basis of a control signal transmitted from the aggregation station 10c. The extension station 20c receives a wireless signal transmitted from an external device located in a direction in which a beam has been formed. The external device is, for example, a wireless device with which the extension station 20c performs communication. The wireless signal received by the extension station 20c is a signal in an RF band. The extension station 20c may transmit a reception signal in the RF band to the aggregation station 10c, or may convert the frequency of the reception signal in the RF band into a frequency in an IF band and transmits the signal to the aggregation station 10c.

For example, the extension station 20c converts a reception signal in the RF band or the IF band and a response signal into optical signals having different wavelengths, and transmits a wavelength multiplexed signal generated by performing wavelength division multiplexing on the optical signals having different wavelengths to the aggregation station 10c. Here, the response signal is a signal for notifying information regarding a beamforming unit 27. For example, the response signal includes status information and the like indicating the current setting of antennas 253 or antennas 256 included in the beamforming unit 27.

The extension station 20c includes an O/E 22, a demultiplexing unit 23, the beamforming unit 27, a frequency conversion unit 28, a plurality of E/Os 29-1 to 29-2, an optical multiplexing/demultiplexing unit 30, and a transmission/reception switching unit 33. Processing of the O/E 22 and the demultiplexing unit 23 is similar to that of the O/E 22-2 and the demultiplexing unit 23 in the first embodiment. Note that the extension station 20c may not include the frequency conversion unit 28 in a case where an RF signal is transmitted to the aggregation station 10c as a reception signal. Here, a case where the extension station 20c includes the frequency conversion unit 28 on the assumption that the extension station 20c transmits an IF signal to the aggregation station 10c as a reception signal will be described. The transmission/reception switching unit 33 may be formed integrally with the frequency conversion unit 28 or may be included in the beamforming unit 27.

The beamforming unit 27 includes the same configuration as the beamforming unit 25. That is, the beamforming unit 27 forms a beam according to a beam control signal included in a control signal transmitted from the aggregation station 10c. The beamforming unit 27 receives a wireless signal transmitted from an external device located in a direction in which a beam has been formed. The beamforming unit 27 converts the received wireless signal into an electrical signal and outputs the electrical signal to the transmission/reception switching unit 33.

Note that the beamforming unit 27 may output a response signal. In a case where the beamforming unit 27 outputs a response signal, the response signal output from the beamforming unit 27 is input to an E/O 29-2.

The transmission/reception switching unit 33 in the fourth embodiment switches connection so as to electrically connect the frequency conversion unit 28 and the beamforming unit 27 at a reception timing indicated by a TDD signal. In a case where the frequency conversion unit 28 and the beamforming unit 27 are electrically connected, a reception signal output from the beamforming unit 27 is output to the frequency conversion unit 28. The transmission/reception switching unit 33 switches connection so as to electrically connect the beamforming unit 27 and a frequency conversion unit used for transmission at a transmission timing indicated by a TDD signal.

The frequency conversion unit 28 converts the frequency of a reception signal (RF signal) output via the transmission/reception switching unit 33 into a signal having a frequency in the IF band (IF signal) using an LO signal generated on the basis of a clock signal output from the demultiplexing unit 23.

A reception signal is input to an E/O 29-1. For example, in a case where the aggregation station 10c includes the frequency conversion unit 28, a reception signal (IF signal) after frequency conversion is input to the E/O 29-1. In a case where the aggregation station 10c does not include the frequency conversion unit 28, a reception signal (RF signal) is input to the E/O 29-1. The E/O 29-1 intensity-modulates an optical signal having a wavelength λ_{RX1} using the input reception signal. As a result, the E/O 29-1 generates an optical modulation signal having the wavelength λ_{RX1}. Note that the power level of a reception signal input to the E/O 29-1 may be adjusted as necessary.

A response signal is input to an E/O 29-2. The E/O 29-2 intensity-modulates an optical signal having a wavelength λ_{RX2} using the input response signal. As a result, the E/O 29-2 generates an optical modulation signal having the wavelength λ_{RX2}. Note that the power level of a response signal input to the E/O 29-2 may be adjusted as necessary.

The optical multiplexing/demultiplexing unit 30 multiplexes or demultiplexes an input optical signal. Specifically, the optical multiplexing/demultiplexing unit 30 demultiplexes an optical signal transmitted via the optical transmission line 40. For example, in the present embodiment, the optical modulation signal having the wavelength λ_{TX2} transmitted from the aggregation station 10c is input to the optical multiplexing/demultiplexing unit 30. The optical modulation signal having the wavelength λ_{TX2} includes, for example, a beam control signal and a clock signal. The optical multiplexing/demultiplexing unit 30 outputs the optical modulation signal having the wavelength λ_{TX2} to the O/E 22.

Further, the optical multiplexing/demultiplexing unit 30 multiplexes an optical modulation signal having the wavelength λ_{RX1} generated by the E/O 29-1 and an optical modulation signal having the wavelength λ_{RX2} generated by the E/O 29-2. Specifically, the optical multiplexing/demultiplexing unit 30 generates a wavelength multiplexed signal by performing wavelength division multiplexing on an optical modulation signal having the wavelength λ_{RX1} generated by the E/O 29-1 and an optical modulation signal having the wavelength λ_{RX2} generated by the E/O 29-2. The optical multiplexing/demultiplexing unit 30 outputs the generated wavelength multiplexed signal to the aggregation station 10c via the optical transmission line 40.

The aggregation station 10c includes an E/O 11, an optical multiplexing/demultiplexing unit 14, and a plurality of O/Es 15-1 to 15-2. Processing of the E/O 11 is similar to that of the E/O 11-2 in the first embodiment.

The optical multiplexing/demultiplexing unit 14 multiplexes or demultiplexes an input optical signal. Specifically, the optical multiplexing/demultiplexing unit 14 multiplexes an optical modulation signal having the wavelength λ_{TX2} generated by the E/O 11. Note that, in the example illustrated in Fig. 9, only an optical modulation signal having the wavelength λ_{TX2} is input to the optical multiplexing/demultiplexing unit 14 as a signal transmitted by the aggregation station 10c. Therefore, the optical multiplexing/demultiplexing unit 14 outputs the input optical modulation signal having the wavelength λ_{TX2} to the extension station 20c via the optical transmission line 40.

Further, the optical multiplexing/demultiplexing unit 14 demultiplexes an optical signal transmitted via the optical transmission line 40. For example, in the present embodiment, a wavelength multiplexed signal transmitted from the extension station 20c is input to the optical multiplexing/demultiplexing unit 14. As a result, the optical multiplexing/demultiplexing unit 14 demultiplexes the wavelength multiplexed signal into an optical modulation signal having the wavelength λ_{RX1} and an optical modulation signal having the wavelength λ_{RX2}. The optical multiplexing/demultiplexing unit 14 outputs the optical modulation signal having the wavelength λ_{RX1} to the O/E 15-1 and outputs the optical modulation signal having the wavelength λ_{RX2} to the O/E 15-2.

The O/E 15-1 is a direct detection unit that directly detects an optical modulation signal having the wavelength λ_{RX1} and extracts an electrical signal. The optical modulation signal having the wavelength λ_{RX1} includes a reception signal.

The O/E 15-2 is a direct detection unit that directly detects an optical modulation signal having the wavelength λ_{RX2} and extracts an electrical signal. The optical modulation signal having the wavelength λ_{RX2} includes a response signal.

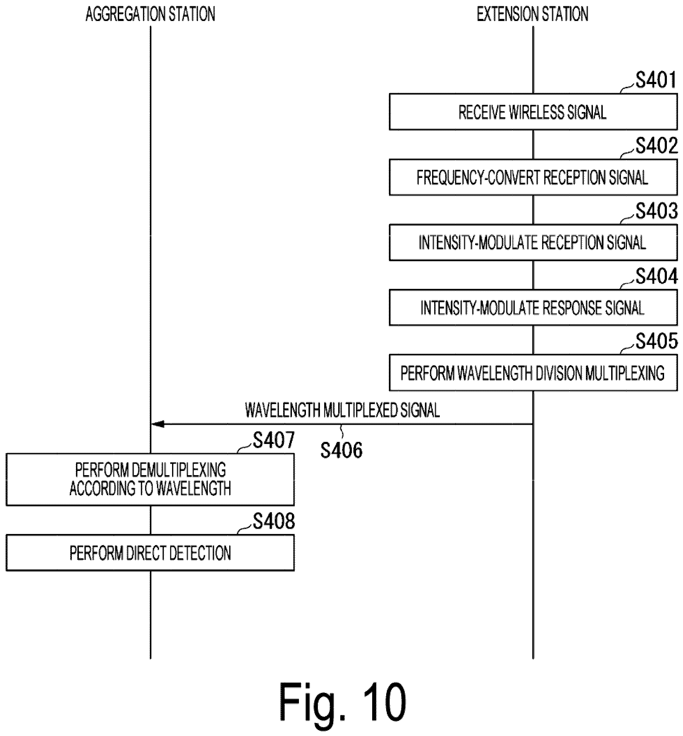

Fig. 10 is a sequence diagram illustrating a flow of processing of the wireless communication system 1c according to the fourth embodiment. Note that, at the start of the processing of Fig. 10, it is assumed that beamforming control is performed on the extension station 20c by the aggregation station 10c. For example, in the processing of Fig. 10, it is assumed that a beam is formed in a direction corresponding to a beam control signal S_{Ti}.

The beamforming unit 27 of the extension station 20c receives a wireless signal transmitted from an external device located in a direction corresponding to the beam control signal S_{Ti} via an antenna 253-i or 256-i (step S401). The beamforming unit 27 converts the received wireless signal into an electrical signal and outputs the electrical signal to the transmission/reception switching unit 33. For example, the beamforming unit 27 outputs an electrical signal from a port corresponding to a port that has received the wireless signal (for example, port to which the antenna 253-i or 256-i is directly or indirectly connected).

The transmission/reception switching unit 33 switches connection so as to electrically connect the frequency conversion unit 28 and the beamforming unit 27 at a reception timing indicated by a TDD signal. As a result, the electrical signal output from the beamforming unit 27 is output to the frequency conversion unit 28.

The frequency conversion unit 28 generates an LO signal with reference to a clock signal output from the demultiplexing unit 23. The frequency conversion unit 28 converts the frequency of the electrical signal (reception signal) output via the transmission/reception switching unit 33 into a frequency in the IF band using the generated LO signal (step S402). That is, the frequency conversion unit 28 converts the frequency of the reception signal. The frequency conversion unit 28 outputs the reception signal after the frequency conversion to the E/O 29-1.

The E/O 29-1 receives the reception signal after the frequency conversion output from the frequency conversion unit 28 as input. The E/O 29-1 intensity-modulates an optical signal having the wavelength λ_{RX1} using the input reception signal after the frequency conversion (step S403). As a result, an optical modulation signal having the wavelength λ_{RX1} is generated. The E/O 29-1 outputs the generated optical modulation signal having the wavelength λ_{RX1} to the optical multiplexing/demultiplexing unit 30.

In a case where a response signal is output from the beamforming unit 27, the E/O 29-2 receives the response signal output from the beamforming unit 27 as input. The E/O 29-2 intensity-modulates an optical signal having the wavelength λ_{RX2} using the input response signal (step S404). As a result, an optical modulation signal having the wavelength λ_{RX2} is generated. The E/O 29-2 outputs the generated optical modulation signal having the wavelength λ_{RX2} to the optical multiplexing/demultiplexing unit 30.

The optical multiplexing/demultiplexing unit 30 performs wavelength division multiplexing on the optical modulation signal having the wavelength λ_{RX1} output from the E/O 29-1 and the optical modulation signal having the wavelength λ_{RX2} output from the E/O 29-2 (step S405). As a result, a wavelength multiplexed signal is generated. The optical multiplexing/demultiplexing unit 30 transmits the generated wavelength multiplexed signal to the optical transmission line 40 (step S406). The wavelength multiplexed signal transmitted to the optical transmission line 40 is input to the aggregation station 10c.

The optical multiplexing/demultiplexing unit 14 of the aggregation station 10c demultiplexes the input wavelength multiplexed signal (step S407). As a result, the wavelength multiplexed signal is demultiplexed into the optical modulation signal having the wavelength λ_{RX1} and the optical modulation signal having the wavelength λ_{RX2}. In the optical multiplexing/demultiplexing unit 14, the O/E 15-1 is connected to an output port for the wavelength λ_{RX1}, and the O/E 15-2 is connected to an output port for the wavelength λ_{RX2}. Therefore, the optical modulation signal having the wavelength λ_{RX1} is output to the O/E 15-1 and the optical modulation signal having the wavelength λ_{RX2} is output to the O/E 15-2.

The O/E 15-1 directly detects the optical modulation signal having the wavelength λ_{RX1} and extracts an electrical signal. As a result, the O/E 15-1 extracts the IF signal (reception signal). The O/E 15-2 directly detects the optical modulation signal having the wavelength λ_{RX2} and extracts an electrical signal (step S408). As a result, the O/E 15-2 extracts the response signal.

According to the wireless communication system 1c formed as described above, effects similar to those of the first embodiment can be obtained also in the upstream direction.

### (Modification of Fourth Embodiment)

In the wireless communication system 1c, the technology of the wireless communication system 1 in the first embodiment may be combined in communication in the downstream direction. In this case, the aggregation station 10c includes a configuration for communication in the downstream direction (for example, a plurality of E/Os 11-1 to 11-2 instead of the E/O 11). The extension station 20c includes a configuration for communication in the downstream direction (for example, a plurality of O/Es 22-1 to 22-2 instead of the O/E 22). The frequency conversion unit 28 performs processing similar to that of the frequency conversion unit 24 at the time of communication in the downstream direction. The beamforming unit 27 performs processing similar to that of the beamforming unit 25 at the time of communication in the downstream direction. In a case where the technology of the wireless communication system 1 and the technology of the wireless communication system 1c are combined, bidirectional communication is enabled by the time division duplex (TDD) method.

In a case where bidirectional communication is performed by the frequency division duplex (FDD) method by combining the technology of the wireless communication system 1 and the technology of the wireless communication system 1c, different frequencies are used in the upstream direction and the downstream direction, and the extension station 20c does not include the transmission/reception switching unit 33. With such a configuration, bidirectional communication in the upstream direction and the downstream direction is enabled also in the frequency division duplex (FDD) method.

### (Fifth Embodiment)

In the fourth embodiment, the configuration in which the extension station converts a reception signal and a response signal into optical signals having different wavelengths and then performs wavelength division multiplexing has been described. A fifth embodiment is different from the fourth embodiment in that an extension station frequency-multiplexes a reception signal and a response signal. In the fifth embodiment, differences from the fourth embodiment will be mainly described.

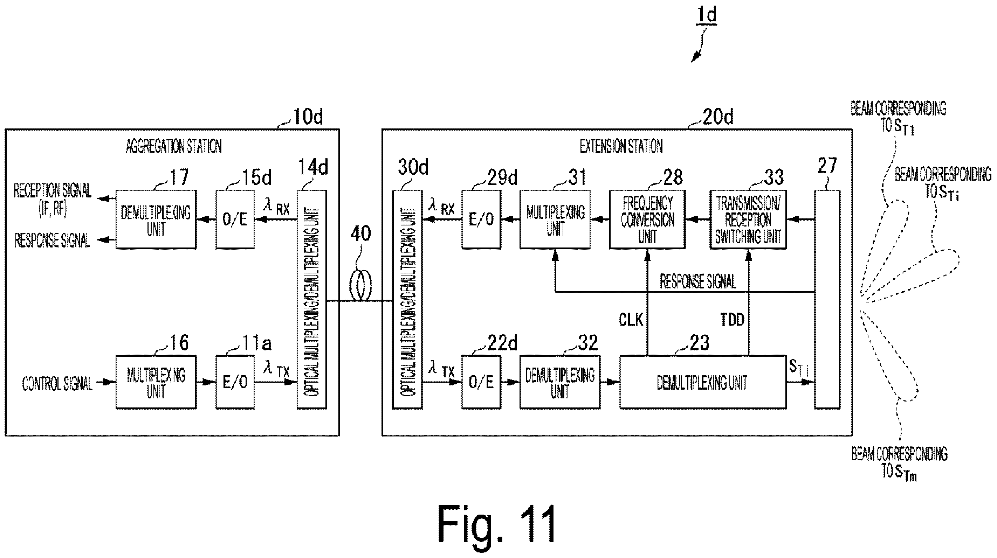

Fig. 11 is a diagram illustrating a configuration example of a wireless communication system 1d according to the fifth embodiment. The wireless communication system 1d includes an aggregation station 10d and an extension station 20d. The aggregation station 10d and the extension station 20d are connected via an optical transmission line 40.

Similarly to the second embodiment, the aggregation station 10d remotely controls beamforming of the extension station 20d by transmitting a control signal to the extension station 20d. For example, the aggregation station 10d remotely controls beamforming of the extension station 20d using an analog RoF technique. Further, the aggregation station 10d receives a reception signal received by the extension station 20d.

Similarly to the second embodiment, the extension station 20d performs beamforming on the basis of a control signal transmitted from the aggregation station 10d. The extension station 20d receives a wireless signal transmitted from an external device located in a direction in which a beam has been formed. The wireless signal received by the extension station 20d is a signal in an RF band. The extension station 20d may transmit a reception signal in the RF band to the aggregation station 10d, or may convert the frequency of a reception signal in the RF band into a frequency in an IF band and transmits the signal to the aggregation station 10d. For example, the extension station 20d converts a multiplexed signal generated by frequency-multiplexing a reception signal in the RF band or the IF band and a response signal into an optical signal and transmits the optical signal to the aggregation station 10d.

The extension station 20d includes an O/E 22d, a demultiplexing unit 23, a beamforming unit 27, a frequency conversion unit 28, an E/O 29d, an optical multiplexing/demultiplexing unit 30d, a multiplexing unit 31, a demultiplexing unit 32, and a transmission/reception switching unit 33. Note that the extension station 20d may not include the frequency conversion unit 28 in a case where an RF signal is transmitted to the aggregation station 10d as a reception signal. Here, a case where the extension station 20d includes the frequency conversion unit 28 on the assumption that the extension station 20d transmits an IF signal to the aggregation station 10d as a reception signal will be described.

The O/E 22d is a direct detection unit that directly detects an optical modulation signal having a wavelength λ_{TX} and extracts an electrical signal. As a result, the O/E 22d extracts at least a control signal. The O/E 22d outputs the control signal to the demultiplexing unit 32.

The demultiplexing unit 32 demultiplexes a signal extracted by the O/E 22d according to the frequency. For example, the demultiplexing unit 32 separates a control signal and another signal from a signal extracted by the O/E 22d. The demultiplexing unit 32 outputs the control signal to the demultiplexing unit 23. In the aggregation station 10d, there is a possibility that a control signal and another signal are multiplexed by a multiplexing unit 16. Therefore, the control signal needs to be separated from another signal in the extension station 20d. Therefore, in the present embodiment, the demultiplexing unit 32 includes a function of separating a control signal and another signal.

A reception signal and a response signal are input to the multiplexing unit 31. Note that the reception signal input to the multiplexing unit 31 is a reception signal in the RF band received by the beamforming unit 27 or a reception signal frequency-converted into a frequency in the IF band by the frequency conversion unit 28. The multiplexing unit 31 generates a multiplexed signal by frequency-multiplexing the input reception signal and response signal. The multiplexing unit 31 outputs the generated multiplexed signal to the E/O 29d. Note that the power level of the reception signal and response signal input to the multiplexing unit 31 may be adjusted as necessary.

The E/O 29d intensity-modulates an optical signal having a wavelength λ_{RX} using the input multiplexed signal. As a result, the E/O 29d generates an optical modulation signal having the wavelength λ_{RX}. The E/O 29d transmits the generated optical modulation signal having the wavelength λ_{RX} to the optical multiplexing/demultiplexing unit 30d.

The optical multiplexing/demultiplexing unit 30d multiplexes or demultiplexes an input optical signal. Specifically, the optical multiplexing/demultiplexing unit 30d demultiplexes an optical signal transmitted via the optical transmission line 40. For example, in the present embodiment, the optical modulation signal having the wavelength λ_{TX} transmitted from the aggregation station 10d is input to the optical multiplexing/demultiplexing unit 30d. The optical modulation signal having the wavelength λ_{TX} includes, for example, a beam control signal and a clock signal. The optical multiplexing/demultiplexing unit 30d outputs the optical modulation signal having the wavelength λ_{TX} to the O/E 22d.

Further, the optical multiplexing/demultiplexing unit 30d multiplexes an optical modulation signal having the wavelength λ_{RX} generated by the E/O 29d. Note that, in the example illustrated in Fig.11, only the optical modulation signal having the wavelength λ_{RX} is input to the optical multiplexing/demultiplexing unit 30d as a signal transmitted by the extension station 20d. Therefore, the optical multiplexing/demultiplexing unit 30d outputs the input optical modulation signal having the wavelength λ_{RX} to the aggregation station 10d via the optical transmission line 40.

The aggregation station 10d includes an E/O 11a, an optical multiplexing/demultiplexing unit 14d, an O/E 15d, the multiplexing unit 16, and a demultiplexing unit 17.

At least a control signal is input to the multiplexing unit 16. For example, the control signal input to the multiplexing unit 16 includes a beam control signal, a clock signal, and a TDD signal. The multiplexing unit 16 generates a multiplexed signal by frequency-multiplexing the input control signal. Note that, similarly to the second embodiment, in a case where a transmission signal and a control signal are input to the multiplexing unit 16, the multiplexing unit 16 generates a multiplexed signal by frequency-multiplexing the input transmission signal and control signal. The multiplexing unit 16 outputs the generated multiplexed signal to the E/O 11a. Note that the power level of a control signal input to the multiplexing unit 16 may be adjusted as necessary.

The optical multiplexing/demultiplexing unit 14d multiplexes or demultiplexes an input optical signal. Specifically, the optical multiplexing/demultiplexing unit 14d multiplexes the optical modulation signal having the wavelength λ_{TX} generated by the E/O 11a. Note that, in the example illustrated in Fig. 11, only the optical modulation signal having the wavelength λ_{TX} is input to the optical multiplexing/demultiplexing unit 14d as a signal transmitted by the aggregation station 10d. Therefore, the optical multiplexing/demultiplexing unit 14d outputs the input optical modulation signal having the wavelength λ_{TX} to the extension station 20d via the optical transmission line 40.

Further, the optical multiplexing/demultiplexing unit 14d demultiplexes an optical signal transmitted via the optical transmission line 40. For example, in the present embodiment, the optical modulation signal having the wavelength λ_{RX} transmitted from the extension station 20d is input to the optical multiplexing/demultiplexing unit 14d. The optical multiplexing/demultiplexing unit 14d outputs the optical modulation signal having the wavelength λ_{RX} to the O/E 15d.

The O/E 15d is a direct detection unit that directly detects an optical modulation signal having the wavelength λ_{RX} and extracts an electrical signal. As a result, the O/E 15d extracts a reception signal and a response signal.

The demultiplexing unit 17 demultiplexes a reception signal and response signal output from the O/E 15d according to the frequency. As a result, a reception signal and a response signal are separated.

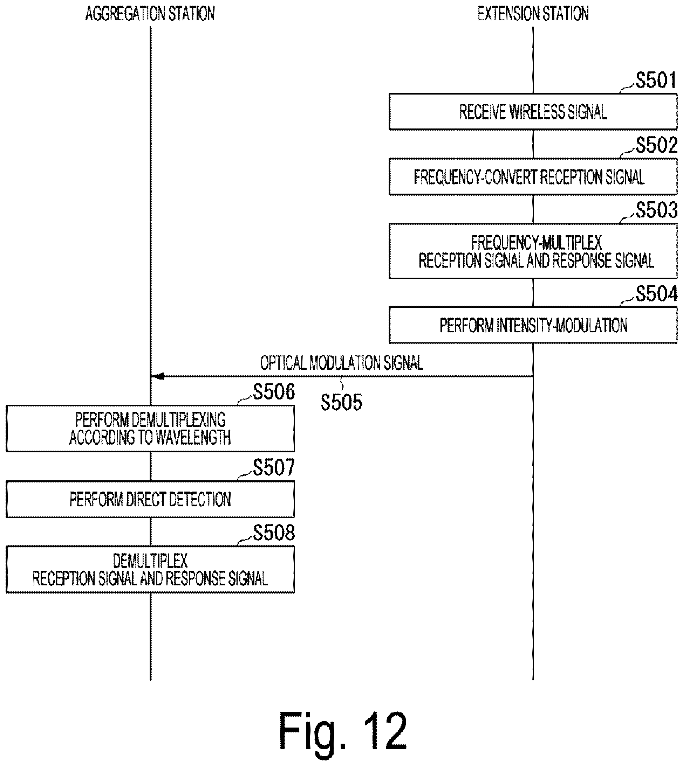

Fig. 12 is a sequence diagram illustrating a flow of processing of the wireless communication system 1d according to the fifth embodiment. Note that, at the start of the processing of Fig. 12, it is assumed that beamforming control is performed on the extension station 20d by the aggregation station 10d. For example, in the processing of Fig. 12, it is assumed that a beam is formed in a direction corresponding to a beam control signal S_{Ti}.

The beamforming unit 27 of the extension station 20d receives a wireless signal transmitted from an external device located in a direction corresponding to the beam control signal S_{Ti} via an antenna 253-i or 256-i (step S501). The beamforming unit 27 converts the received wireless signal into an electrical signal and outputs the electrical signal to the transmission/reception switching unit 33. For example, the beamforming unit 27 outputs an electrical signal from a port corresponding to a port that has received the wireless signal (for example, port to which the antenna 253-i or 256-i is directly or indirectly connected). Further, the beamforming unit 27 outputs a response signal to the multiplexing unit 31 as necessary.

The transmission/reception switching unit 33 switches connection so as to electrically connect the frequency conversion unit 28 and the beamforming unit 27 at a reception timing indicated by a TDD signal. As a result, the electrical signal output from the beamforming unit 27 is output to the frequency conversion unit 28.

The frequency conversion unit 28 generates an LO signal with reference to a clock signal output from the demultiplexing unit 23. The frequency conversion unit 28 converts the frequency of the electrical signal (reception signal) output via the transmission/reception switching unit 33 into a frequency in the IF band using the generated LO signal (step S502). That is, the frequency conversion unit 28 converts the frequency of the reception signal. The frequency conversion unit 28 outputs the reception signal after the frequency conversion to the multiplexing unit 31.

The multiplexing unit 31 frequency-multiplexes the reception signal after the frequency conversion and the response signal (step S503). As a result, a multiplexed signal is generated. The multiplexing unit 31 outputs the generated multiplexed signal to the E/O 29d. The E/O 29d receives the multiplexed signal output from the multiplexing unit 31. The E/O 29d intensity-modulates an optical signal having the wavelength λ_{RX} using the input multiplexed signal (step S504). As a result, an optical modulation signal having the wavelength λ_{RX} is generated. The E/O 29d outputs the generated optical modulation signal having the wavelength λ_{RX} to the optical multiplexing/demultiplexing unit 30d.

The optical multiplexing/demultiplexing unit 30d receives the optical modulation signal having the wavelength λ_{RX} output from the E/O 29 as input. The optical multiplexing/demultiplexing unit 30d transmits the input optical modulation signal having the wavelength λ_{RX} to the optical transmission line 40 (step S505). The optical modulation signal having the wavelength λ_{RX} transmitted to the optical transmission line 40 is input to the aggregation station 10d.

The optical multiplexing/demultiplexing unit 14d of the aggregation station 10d demultiplexes the input optical modulation signal having the wavelength λ_{RX} (step S506). As a result, the optical modulation signal having the wavelength λ_{RX} is output to the O/E 15d. The O/E 15d directly detects the optical modulation signal having the wavelength λ_{RX} and extracts the electrical signal. As a result, the O/E 15d extracts the IF signal (reception signal) and the response signal (step S507). The O/E 15d outputs the IF signal (reception signal) and the response signal to the demultiplexing unit 17. The demultiplexing unit 17 demultiplexes the IF signal (reception signal) and response signal output from the O/E 15d according to the frequency (step S508). As a result, the demultiplexing unit 17 separates the IF signal (reception signal) and the response signal.

According to the wireless communication system 1d formed as described above, effects similar to those of the second embodiment can be obtained also in the upstream direction.

### (Modification of Fifth Embodiment)

In the wireless communication system 1d, the technology of the wireless communication system 1a in the second embodiment may be combined in communication in the downstream direction. In this case, similarly to the second embodiment, a transmission signal and a control signal are input to the multiplexing unit 16 of the aggregation station 10d, and the input transmission signal and control signal are frequency-multiplexed. An electrical signal that is output from the O/E 22d is input to the demultiplexing unit 32 of the extension station 20d, and the input electrical signal is separated into a control signal and another signal (for example, transmission signal). The demultiplexing unit 32 outputs the control signal to the demultiplexing unit 23 and outputs another signal to the frequency conversion unit 28. The frequency conversion unit 28 performs processing similar to that of the frequency conversion unit 24 at the time of communication in the downstream direction. The beamforming unit 27 performs processing similar to that of the beamforming unit 25 at the time of communication in the downstream direction. In a case where the technology of the wireless communication system 1a and the technology of the wireless communication system 1d are combined, bidirectional communication is enabled by the time division duplex (TDD) method.

In a case where bidirectional communication is performed by the frequency division duplex (FDD) method by combining the technology of the wireless communication system 1a and the technology of the wireless communication system 1d, different frequencies are used in the upstream direction and the downstream direction, and the extension station 20d does not include the transmission/reception switching unit 33. With such a configuration, bidirectional communication in the upstream direction and the downstream direction is enabled also in the frequency division duplex (FDD) method.

### (Sixth Embodiment)

In the fifth embodiment, the configuration in which the extension station generates an LO signal in the frequency conversion unit on the basis of a clock signal has been described. On the other hand, a sixth embodiment is different from the fifth embodiment in that an LO signal is transmitted from an aggregation station. In the sixth embodiment, differences from the fifth embodiment will be mainly described.

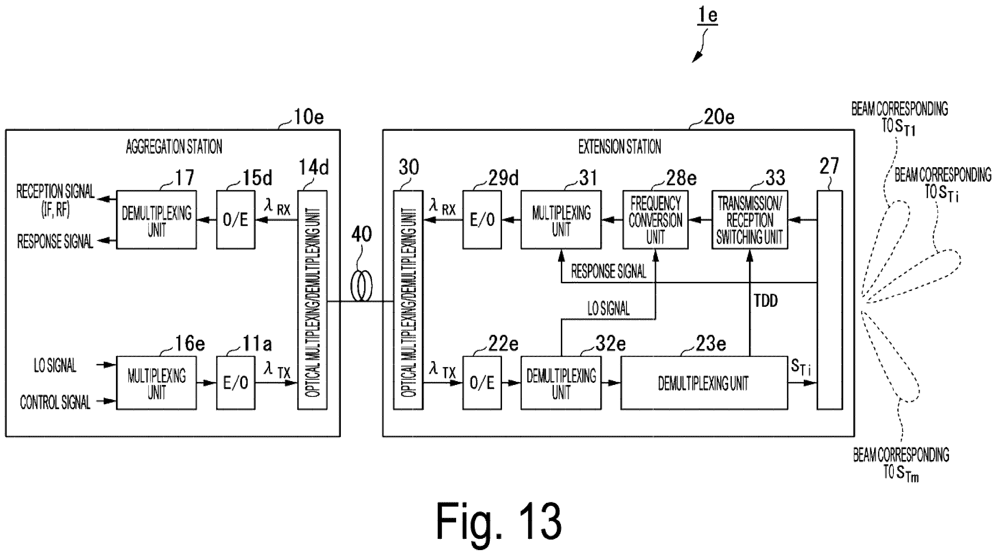

Fig. 13 illustrates a configuration example of a wireless communication system 1e according to the sixth embodiment. The wireless communication system 1e includes an aggregation station 10e and an extension station 20e. The aggregation station 10e and the extension station 20e are connected via an optical transmission line 40.

The aggregation station 10e remotely controls beamforming of the extension station 20e by a multiplexed signal generated by frequency-multiplexing at least a control signal and an LO signal. For example, the aggregation station 10e remotely controls beamforming of the extension station 20e using an analog RoF technique. Further, the aggregation station 10e receives a reception signal received by the extension station 20e.

Similarly to the third embodiment, the extension station 20e performs beamforming on the basis of a control signal included in a multiplexed signal transmitted from the aggregation station 10e. The extension station 20e receives a wireless signal transmitted from an external device located in a direction in which a beam has been formed. The wireless signal received by the extension station 20e is a signal in an RF band. The extension station 20e may transmit a reception signal in the RF band to the aggregation station 10e, or may convert the frequency of a reception signal in the RF band into a frequency in an IF band and transmits the signal to the aggregation station 10e. For example, the extension station 20e converts a multiplexed signal generated by frequency-multiplexing a reception signal in the RF band or the IF band and a response signal into an optical signal and transmits the optical signal to the aggregation station 10e.

The extension station 20e includes an O/E 22e, a demultiplexing unit 23e, a beamforming unit 27, a frequency conversion unit 28e, an E/O 29d, an optical multiplexing/demultiplexing unit 30, a multiplexing unit 31, a demultiplexing unit 32e, and a transmission/reception switching unit 33.

The O/E 22e is a direct detection unit that directly detects an optical modulation signal having a wavelength λ_{TX} and extracts an electrical signal. As a result, the O/E 22e extracts at least a control signal and an LO signal. The O/E 22d outputs a control signal and an LO signal to the demultiplexing unit 32e.

The demultiplexing unit 32e demultiplexes an electrical signal extracted by the O/E 22e according to the frequency. Specifically, the demultiplexing unit 32e separates a control signal and an LO signal included in the electrical signal extracted by the O/E 22e according to the frequency. As a result, the control signal and the LO signal are separated. The demultiplexing unit 32e outputs the LO signal to the frequency conversion unit 28e and outputs the control signal to the demultiplexing unit 23e.

A control signal separated by the demultiplexing unit 32e is input to the demultiplexing unit 23e. The demultiplexing unit 23e demultiplexes the input control signal according to the frequency. As a result, the demultiplexing unit 23e separates a beam control signal (S_{Ti} in Fig. 13) and a TDD signal from the control signal. The demultiplexing unit 23e outputs the beam control signal to the beamforming unit 27, and outputs the TDD signal to the transmission/reception switching unit 33.

The frequency conversion unit 28e converts the frequency of a reception signal (RF signal) output via the transmission/reception switching unit 33 into a signal having a frequency in the IF band (IF signal) using an LO signal output from the demultiplexing unit 32e.

The aggregation station 10e includes an E/O 11a, an optical multiplexing/demultiplexing unit 14d, an O/E 15d, a multiplexing unit 16e, and a demultiplexing unit 17.

At least a control signal and an LO signal are input to the multiplexing unit 16e. For example, the control signal input to the multiplexing unit 16e includes a beam control signal and a TDD signal. The multiplexing unit 16e generates a multiplexed signal by frequency-multiplexing the input control signal and LO signal. Note that, similarly to the third embodiment, in a case where a transmission signal, a control signal, and an LO signal are input to the multiplexing unit 16e, the multiplexing unit 16e generates a multiplexed signal by frequency-multiplexing the input transmission signal, control signal, and LO signal. The multiplexing unit 16e outputs the generated multiplexed signal to the E/O 11a. Note that the power level of a control signal and an LO signal input to the multiplexing unit 16e may be adjusted as necessary.

According to the wireless communication system 1e formed as described above, effects similar to those of the third embodiment can be obtained also in the upstream direction.

### (Modification of Sixth Embodiment)

In the wireless communication system 1e, the technology of the wireless communication system 1b in the third embodiment may be combined in communication in the downstream direction. In this case, similarly to the third embodiment, a transmission signal, a control signal, and an LO signal are input to the multiplexing unit 16e of the aggregation station 10e, and the input transmission signal, control signal, and LO signal are frequency-multiplexed. An electrical signal that is extracted by the O/E 22e is input to the demultiplexing unit 32e of the extension station 20e, and the input electrical signal is separated into a control signal and other signals (for example, transmission signal and LO signal). The demultiplexing unit 32e outputs the control signal to the demultiplexing unit 23e and outputs the other signals to the frequency conversion unit 28e. The frequency conversion unit 28e performs processing similar to that of the frequency conversion unit 24e at the time of communication in the downstream direction. The beamforming unit 27 performs processing similar to that of the beamforming unit 25 at the time of communication in the downstream direction. In a case where the technology of the wireless communication system 1b and the technology of the wireless communication system 1e are combined, bidirectional communication is enabled by the time division duplex (TDD) method.

In a case where bidirectional communication is performed by the frequency division duplex (FDD) method by combining the technology of the wireless communication system 1b and the technology of the wireless communication system 1e, different frequencies are used in the upstream direction and the downstream direction, and the extension station 20e does not include the transmission/reception switching unit 33. With such a configuration, bidirectional communication in the upstream direction and the downstream direction is enabled.

Some functional units of the aggregation stations 10, 10a, 10b, 10c, 10d, and 10e and the extension stations 20, 20a, 20b, 20c, 20d, and 20e in the above-described embodiments may be implemented by a computer. In that case, a program for implementing the functions may be recorded in a computer-readable recording medium, and the functions may be implemented by loading the program recorded in this recording medium to a computer system, and executing the program. Note that the "computer system" mentioned herein includes an OS and hardware such as peripheral devices.

The "computer-readable recording medium" refers to a portable medium such as a flexible disk, a magneto-optical disc, a ROM, or a CD-ROM or a storage device such as a hard disk included in the computer system. Further, the "computer-readable recording medium" may include a medium that dynamically holds the program for a short time, such as a communication line in a case where the program is transmitted via a network such as the Internet or a communication line such as a telephone line, and a medium that holds the program for a certain period of time, such as a volatile memory inside a computer system serving as a server or a client in that case. The above program may be for implementing some of the functions described above, may implement the functions described above by a combination with a program already recorded in the computer system, or may be implemented by using a programmable logic device such as an FPGA.

Although the embodiments of the present invention have been described in detail with reference to the drawings, the specific configuration is not limited to the embodiments, and includes design and the like within the scope not departing from the gist of the present invention.

### Industrial Applicability

The present invention is applicable to a wireless communication system that performs RoF transmission.

### Reference Signs List

10, 10a, 10b, 10c, 10d, 10e Aggregation station
20, 20a, 20b, 20c, 20d, 20e Extension station
11-1, 11-2, 11a, 29, 29d, 29-1, 29-2 E/O
12 Optical multiplexing unit
13, 16, 16e, 31 Multiplexing unit
14, 14d, 30, 30d Optical multiplexing/demultiplexing unit
15, 15d, 15-1, 15-2, 22-1, 22-2, 22a O/E
17, 23, 23e, 26 Demultiplexing unit
21 Optical demultiplexing unit
24, 28, 28e Frequency conversion unit
25, 27 Beamforming unit
33, 33e Transmission/reception switching unit
251 Control unit
252-1 to 252-n Phase shifter
253-1 to 253-n, 256-1 to 256-N Antenna
254 Control switch
255 Passive beamforming unit

## Claims

1. A wireless communication method in a wireless communication system including an aggregation station and an extension station that performs beamforming according to control of the aggregation station, wherein
the aggregation station transmits an optical signal including at least a beam control signal for controlling beamforming in the extension station and a transmission signal that is data to be transmitted to the extension station via an optical transmission line to perform beamforming control of the extension station, and
the extension station transmits the transmission signal by setting, in a phase shifter or by switching a switch, a phase difference for performing beamforming in a specific direction on a basis of the beam control signal included in the optical signal.

2. The wireless communication method according to claim 1, wherein
the aggregation station generates the optical signal by performing wavelength division multiplexing by intensity-modulating the beam control signal and the transmission signal to different wavelengths, and
the extension station sets, in a phase shifter or by switching a switch, a phase difference for performing beamforming in the specific direction by demultiplexing the optical signal according to a wavelength and acquiring the beam control signal included in the optical signal.

3. The wireless communication method according to claim 1, wherein
the aggregation station generates the optical signal by frequency-multiplexing the beam control signal and the transmission signal and then performing intensity-modulation to a specific wavelength, and
the extension station sets, in a phase shifter or by switching a switch, a phase difference for performing beamforming in the specific direction by directly detecting the optical signal, extracting an electrical signal, and then acquiring the beam control signal included in the extracted electrical signal.

4. The wireless communication method according to claim 3, wherein,
in a case where the transmission signal is in an intermediate frequency band,
the aggregation station generates the optical signal by frequency-multiplexing the beam control signal, the transmission signal, and a signal for frequency conversion and then performing intensity-modulation to a specific wavelength, and
the extension station sets, in a phase shifter or by switching a switch, a phase difference for performing beamforming in the specific direction by directly detecting the optical signal, extracting an electrical signal, then performing frequency-conversion on a frequency of the transmission signal included in the extracted electrical signal on a basis of a signal for the frequency conversion, and acquiring the beam control signal included in the electrical signal.

5. The wireless communication method according to any one of claims 1 to 4, wherein
the extension station performs beamforming in the specific direction by controlling a rotation amount of a phase in a plurality of phase shifters according to the beam control signal, or performs beamforming in the specific direction by switching connection of a switch such that the transmission signal is input to a port capable of performing beamforming in the specific direction according to the beam control signal.

6. The wireless communication method according to any one of claims 1 to 4, wherein
the extension station converts a wireless signal transmitted from an external device into an electrical signal, inputs the electrical signal to a second port of a beamforming unit, outputs the electrical signal from a first port of the beamforming unit corresponding to the second port, and transmits an optical signal obtained by intensity-modulating an optical signal using the electrical signal to the aggregation station, and
the aggregation station acquires at least a reception signal from the optical signal transmitted from the extension station.

7. A base station device in a wireless communication system including an aggregation station and an extension station that performs beamforming according to control of the aggregation station, the base station device comprising:
an aggregation station that transmits an optical signal including at least a beam control signal for controlling beamforming in the extension station and a transmission signal that is data to be transmitted to the extension station via an optical transmission line to perform beamforming control of the extension station; and
an extension station that transmits the transmission signal by setting, in a phase shifter or by switching a switch, a phase difference for performing beamforming in a specific direction on a basis of the beam control signal included in the optical signal.

8. A wireless communication system comprising an aggregation station and an extension station that performs beamforming according to control of the aggregation station, wherein
the aggregation station transmits an optical signal including at least a beam control signal for controlling beamforming in the extension station and a transmission signal that is data to be transmitted to the extension station via an optical transmission line to perform beamforming control of the extension station, and
the extension station includes a beamforming unit configured to transmit the transmission signal by setting, in a phase shifter or by switching a switch, a phase difference for performing beamforming in a specific direction on a basis of the beam control signal included in the optical signal.
